# EUROPÄISCHE PATENTSCHRIFT

(11) **EP 4 229 365 B1**
(45) Veröffentlichungstag und Bekanntmachung des Hinweises auf die Patenterteilung: **21.05.2025**
(21) Anmeldenummer: 21777673.1
(22) Anmeldetag: 13.09.2021
(51) Int. Cl.: G01F 23/296, G01F 23/80, G01N 9/00, G01F 25/20, G01N 11/16

(54) **VERFAHREN ZUM BETREIBEN EINES VIBRONISCHEN SENSORS**
METHOD OF OPERATING A VIBRONIC SENSOR
PROCÉDÉ DE FONCTIONNEMENT D'UN CAPTEUR VIBRONIQUE

(30) Priorität: 14.10.2020 DE 102020127077
(43) Veröffentlichungstag der Anmeldung: 23.08.2023
(73) Patentinhaber: Endress+Hauser SE+Co. KG, 79689 Maulburg (DE)
(72) Erfinder: STRITTMATTER, Christian, 79736 Rickenbach (DE); UPPENKAMP, Kaj, 79664 Wehr (DE); WERNET, Armin, 79618 Rheinfelden (DE)
(74) Vertreter: Endress + Hauser Group Services (Deutschland) AG+Co. KG
(86) Internationale Anmeldenummer: PCT/EP2021/075124
(87) Internationale Veröffentlichungsnummer: WO 2022/078684

(56) Entgegenhaltungen:
- DE-A1- 10 242 970
- DE-A1- 10 328 296
- DE-A1- 102005 009 580
- DE-A1- 19 720 519
- DE-C2- 3 348 119
- US-A1- 2005 210 954

## Beschreibung

Die Erfindung betrifft ein Verfahren zur Bestimmung und/oder Überwachung eines vorgebbaren Füllstands eines Mediums in einem Behältnis mittels eines vibronischen Sensors mit den Merkmalen des Oberbegriffs des ersten Anspruchs. Neben einem, insbesondere vorgebbaren, Füllstand eines Mediums können vibronische Sensoren auch zur Bestimmung des Durchflusses, der Dichte, oder der Viskosität des Mediums verwendet werden. Das Behältnis ist beispielsweise ein Behälter oder eine Rohrleitung. Ein gattungsgemäßes Verfahren ergibt sich aus der DE 10 2005 009 580 A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE102010030982A1.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden (siehe beispielsweise die DE 33 48 119 C2).

Die Dichte und/oder Viskosität wiederum lassen sich mit einem derartigen Messgerät nur ermitteln, wenn die schwingfähige Einheit vom Medium bedeckt ist, wie beispielsweise in den Dokumenten DE10050299A1, DE102007043811A1, DE10057974A1, DE102006033819A1, oder DE102015102834A1.

Um das zuverlässige Arbeiteten eines vibronischen Sensors zu gewährleisten, sind ferner zahlreiche Verfahren bekannt geworden, mit welchen eine Zustandsüberwachung des Sensors durchführbar ist, wie z. B. in den Dokumenten DE102005036409A1, oder DE102007008669A1, DE102017111392A1 oder DE102017102550A1 beschrieben. Siehe auch die US 2005/0210954 A1.

In der DE 103 28 296 A1 wird Ansatz an einer Schwinggabel durch die Auswertung der Frequenz der Schwingungen erkannt.

Eine Diskussion der Auswertung von Amplitude und Frequenz lässt sich der DE 10 2005 009 580 A1, der DE 102 42 970 A1 oder der DE 197 20 519 A1 entnehmen.

Der vorliegenden Erfindung liegt die Aufgabe zugrunde, den Anwendungsbereich von vibronischen Sensoren zu erweitern.

Diese Aufgabe wird erfindungsgemäß gelöst durch ein Verfahren mit den Merkmalen des ersten Anspruchs.

Erfindungsgemäß wird für die Amplitude und für die Frequenz jeweils ein Referenzwert festgelegt, mittels welchen die Amplitude und die Frequenz des Empfangssignals jeweils verglichen werden.

Durch die Betrachtung der beiden Größen Amplitude und Frequenz ergeben sich erweiterte Aussagemöglichkeiten hinsichtlich der Prozessgröße. Beispielsweise kann eine Änderung der Frequenz oder Amplitude auf unterschiedliche Ursachen rückführbar sein. Durch eine zusätzliche Betrachtung der jeweils anderen charakteristischen Größe kann zwischen den verschiedenen, möglichen Ursachen für die Änderung unterschieden werden.

In einer Ausgestaltung wird überprüft, ob die Frequenz einen vorgebbaren Frequenz-Grenzwert über- oder unterschreitet. Ebenso wird in einer anderen Ausgestaltung überprüft, ob die Amplitude einen vorgebbaren Amplituden-Grenzwert über- oder unterschreitet.

Eine Ausgestaltung beinhaltet, dass die Frequenz und/oder Amplitude des Empfangssignals als Funktion der Zeit aufgezeichnet wird/werden. Auf diese Weise können auch zeitliche Entwicklungen des Sensors beobachtet werden. Das erfindungsgemäße Verfahren ermöglicht somit ferner vorteilhaft die Durchführung einer, insbesondere vorausschauenden, Wartung (engl. predictive maintenance).

Eine Ausgestaltung des erfindungsgemäßen Verfahrens beinhaltet, dass im Falle einer Änderung der Frequenz, insbesondere im Falle eines Über- oder Unterschreitens des vorgebbaren Frequenz-Grenzwerts, und einer gleichzeitig im Wesentlichen gleichbleibender Amplitude auf eine Bedeckung der schwingfähigen Einheit mit einem Fluid geschlossen wird. Ändert sich nur die Frequenz bei im Wesentlichen konstanter Amplitude, so kann demnach eine über das Erreichen des vorgebbaren Füllstands gemacht werden.

Erfindungsgemäß ist vorgesehen, dass im Falle einer Änderung der Amplitude, insbesondere im Falle eines Über- oder Unterschreitens des vorgebbaren Amplituden-Grenzwerts, auf eine Bedeckung der schwingfähigen Einheit durch einen Schaum oder auf das Vorhandensein eines Sediments in dem Medium geschlossen wird. Vorteilhaft erlaubt die vorliegende Erfindung die Detektion von Schäumen und Sedimenten, welche mit herkömmlichen Auswerteverfahren üblicherweise nicht oder nur mit größerem Aufwand detektierbar sind.

In diesem Zusammenhang wird erfindungsgemäß im Falle einer im Wesentlichen gleichbleibender Frequenz auf eine Ablagerung von Sediment im Bereich der schwingfähigen Einheit geschlossen. Dies ist insbesondere von Vorteil, wenn der vibronische Sensor dazu verwendet wird, einen minimalen Grenzstand in einem Behältnis zu ermitteln. In diesem Falle kann beispielsweise Sediment im Bodenbereich des Behältnisses detektiert werden, welcher die getroffene Aussage über den Grenzstand verfälschen kann. Bei genauer Kenntnis des Vorhandenseins von Sediment im Bodenbereich ist also eine deutlich genauere Bestimmung des Grenzstandes möglich.

Alternativ ist erfindungsgemäß vorgesehen, dass im Falle einer Änderung der Frequenz, wobei der vorgebbare Frequenz-Grenzwert nicht über- oder unterschritten wird, auf das Vorhandensein eines Sediments in dem Medium oder die Bedeckung durch einen Schaum geschlossen wird. Eine geringfüge Änderung der Frequenz, bei welcher der Frequenz-Grenzwert jedoch noch nicht über- oder unterschritten ist, ist erfindungsgemäß ein Indikator für Schaum oder in dem Medium gelöstes Sediment.

In einer Ausgestaltung des Verfahrens handelt es sich bei dem Amplituden-Referenzwert und/oder dem Frequenz-Referenzwert jeweils um einen Wert für die Amplitude und/oder die Frequenz, welcher Wert einer Resonanzschwingung der schwingfähigen Einheit in der Grundschwingungsmode und an Luft entspricht. Beispielsweise können diese Referenzwerte während der Fertigung des jeweiligen Sensors ermittelt und beispielsweise in einer Speichereinheit, in einer Datenbank oder auf einem Datenblatt hinterlegt werden. Die Referenzwerte entsprechen dann dem Auslieferungszustand des Sensors. Sie können aber auch beim Kunden und nach Einbau in das jeweilige Behältnis ermittelt werden. Indem die Referenzwerte für jeden Sensor individuell bestimmt werden, kann den üblichen, sich durch Fertigungstoleranzen ergebenden, Varianzen dieser Werte, direkt begegnet werden.

Es ist im Rahmen des erfindungsgemäßen Verfahrens ebenfalls von Vorteil, wenn die mechanisch schwingfähige Einheit zu mechanischen Resonanzschwingungen in der Grundschwingungsmode angeregt wird, wobei das Empfangssignal die Resonanzschwingungen der schwingfähigen Einheit in der Grundschwingungsmode repräsentiert.

Eine weitere Ausgestaltung beinhaltet schließlich, dass es sich bei der schwingfähigen Einheit um eine Schwinggabel mit einer Membran und zwei an der Membran befestigten Schwingstäben handelt.

Zusammenfassend erlaubt die vorliegende Erfindung eine präzise Bestimmung und/oder Überwachung des vorgebbaren Füllstands mittels eines vibronischen Sensors, welche sehr einfach realisierbar ist. Durch die gleichzeitige Betrachtung von Frequenz und Amplitude ist eine genauere Bestimmung der Prozessgröße möglich und verschiedenste negative Einflussfaktoren auf die Prozessgrößenbestimmung, wie beispielsweise das Vorhandensein von Schaum oder Sediment, können detektiert und ihr Einfluss auf die getroffene Aussage somit eliminiert werden.

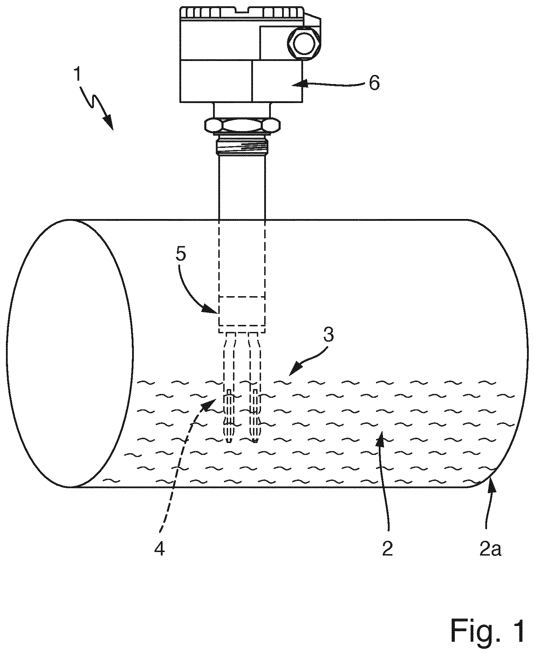

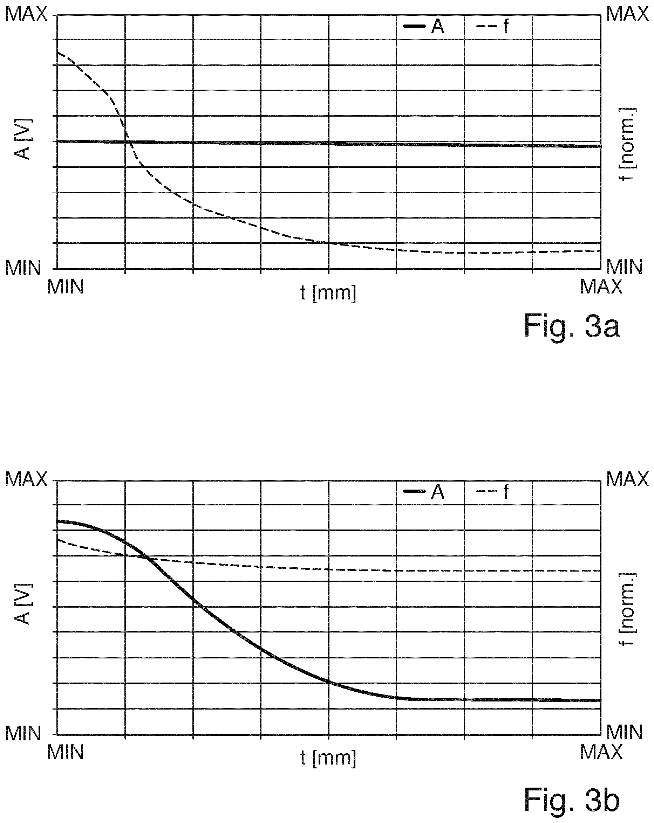

Die Erfindung sowie deren Vorteile werden anhand der nachfolgenden Figuren Fig. 1 und Fig. 3 genauer beschrieben. Es zeigt:
Fig. 1 einen vibronischen Sensor gemäß Stand der Technik,
Fig.2 eine schwingfähige Einheit eines vibronischen Sensors in Form einer Schwinggabel, und
Fig. 3 Diagramme der Frequenz und Amplitude für unterschiedliche Medien zur Illustration des erfindungsgemäßen Vorgehens.

In Fig. 1 ist ein vibronischer Sensor 1 gezeigt. Dargestellt ist eine Sensoreinheit 3 mit einer schwingfähigen Einheit 4 in Form einer Schwinggabel, welche teilweise in ein Medium 2 eintaucht, welches sich in einem Behälter 2a befindet. Die schwingfähige Einheit 4 wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

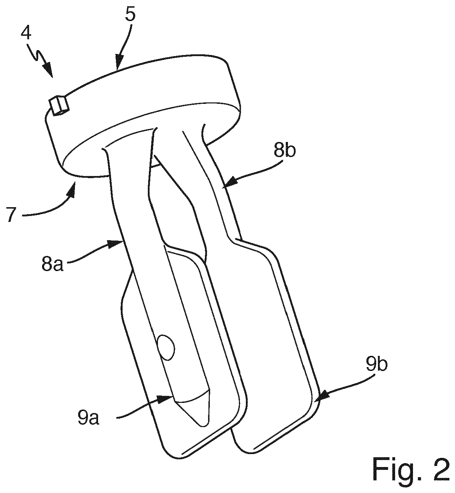

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, in einer Seitenansicht gezeigt. Die Schwinggabel 4 umfasst zwei an eine Membran 7 angeformte Schwingstäbe 8a,8b, an welche endseitig zwei Paddel 9a,9b angeformt sind. Die Schwingstäbe 8a,8b zusammen mit den Paddeln 9a,9b werden häufig auch als Gabelzinken bezeichnet. Um die mechanisch schwingfähige Einheit 4 in mechanische Schwingungen zu versetzen, wird mittels einer auf der den Schwingstäben 7a,7b abgewandten Seite der Membran 8 stoffschlüssig angebrachten Antriebs-/Empfangseinheit 5 eine Kraft auf die Membran 8 aufgeprägt. Die Antriebs-/Empfangseinheit 5 ist eine elektromechanische Wandlereinheit, und umfasst beispielsweise ein piezoelektrisches Element, oder auch einen elektromagnetischen Antrieb [nicht gezeigt]. Entweder sind die Antriebseinheit 5 und die Empfangseinheit als zwei separate Einheiten aufgebaut oder als kombinierte Antriebs-/Empfangseinheit. Im Falle, dass die Antriebs-/Empfangseinheit 5 ein piezoelektrisches Element 9 umfasst, wird die der Membran 7 aufgeprägte Kraft über das Anlegen eines Anregesignals U_{A}, beispielweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal U_{A} zu einer Schwingung der stoffschlüssig mit der Antriebs-/Empfangseinheit 5 verbundenen Membran 7 hervorruft. Umgekehrt werden die mechanischen Schwingungen der schwingfähigen Einheit über die Membran an die Antriebs-/Empfangseinheit 5 übertragen und in ein elektrisches Empfangssignal U_{E} umgewandelt. Der vorgebbare Füllstand des Mediums 2 in dem Behälter 2a kann dann anhand des Empfangssignals U_{E}, beispielsweise anhand einer Amplitude A, Frequenz f, oder Phase des Empfangssignals U_{E}, ermittelt werden.

Das erfindungsgemäße Verfahren erlaubt nun eine deutlich höhere Genauigkeit bei der Bestimmung des vorgebbaren Füllstands in einem erweiterten Anwendungsbereich. Verschiedene bevorzugte Ausgestaltungen sind in diesem Zusammenhang beispielhaft in Fig. 3 dargestellt.

In einem ersten Schritt werden Referenzwerte f_{ref}, A_{ref} für die Amplitude und die Frequenz ermittelt, wobei die schwingfähige Einheit 4 an Luft zu Resonanzschwingungen angeregt wird. Zur Ermittlung einer Aussage über den vorgebbaren Füllstand im fortlaufenden Betrieb wird die schwingfähige Einheit 4 mittels eines Anregesignals U_{A} zu mechanischen Schwingungen in der Grundschwingungsmode angeregt und das die Schwingungen repräsentierende Empfangssignal U_{E} wird empfangen und hinsichtlich der Frequenz f und Amplitude A ausgewertet. Die Werte f, A werden mit den jeweiligen Referenzwerten f_{ref}, A_{ref} verglichen und beispielsweise eine Abweichung der Messwerte f, A von den Referenzwerten f_{ref}, A_{ref} ermittelt, oder es wird überprüft, ob die Frequenz f und/oder Amplitude A den jeweils vorgebbaren Grenzwert f_{ref} oder A_{ref} über- oder unterschreiten.

In Fig. 3 sind exemplarische Diagramme der Frequenz f und Amplitude A gezeigt, in denen für unterschiedliche Situationen jeweils die Frequenz f und Amplitude A als Funktion der Eintauchtiefe t der schwingfähigen Einheit 4 in das Medium 2 dargestellt ist. Im Falle einer Bedeckung der schwingfähigen Einheit 4 mit einem flüssigen Medium 2 kommt es zu einer Änderung der Frequenz f bei im Wesentlichen konstanter Amplitude A bzw. nur einer geringförmigen Änderung der Amplitude A, wie in Fig. 3a illustriert.

Kann dagegen eine Änderung der Amplitude A, insbesondere über einen vorgebbaren Amplituden-Grenzwert A_{ref} hinaus, detektiert werden, so kann auf eine Bedeckung der schwingfähigen Einheit 4 durch einen Schaum oder auf das Vorhandensein eines Sediments in dem Medium geschlossen werden, wie in Fig. 3b illustriert. Ohne die zusätzliche Betrachtung könnte zwischen einer frei schwingenden schwingfähigen Einheit 4 und eine Bedeckung durch Schaum oder Sediment überhaupt nicht unterschieden werden. Dies kann zu erheblichen Problemen führen, da das Erreichen des vorgebbaren Grenzwerts ggf. nicht korrekt angezeigt werden kann.

Um zudem zwischen einem Sediment und einem Schaum unterscheiden können, kann beispielsweise bei Vorhandensein einer Änderung der Amplitude A, wie im Falle der Fig. 3b, eine zusätzliche Betrachtung der Frequenz f hilfreich sein. Bleibt die Frequenz f im Wesentlichen konstant, so kann beispielsweise eine Ablagerung von Sediment im Bereich der schwingfähigen Einheit 4 vorliegen. Wird hingegen auch eine Änderung der Frequenz f detektiert, die aber beispielsweise einen vorgebbaren Grenzwert für die Frequenz nicht überschreitet, so kann auf das Vorhandensein eines Sediments in dem Medium 2 oder die Bedeckung der schwingfähigen Einheit 4 durch einen Schaum geschlossen werden.

Neben den genannten Möglichkeiten sind noch zahlreiche weitere Ausgestaltungen des erfindungsgemäßen Verfahrens denkbar, welche weitere Schlussfolgerungen aus der Betrachtung der Frequenz und Amplitude hinsichtlich der Ermittlung einer Aussage über den Grenzstand ermöglichen, welche ebenfalls unter die vorliegende Erfindung fallen.

### Bezugszeichen

- 1: Vibronischer Sensor
- 2: Medium
- 2a: Behälter
- 3: Sensoreinheit
- 4: Schwingfähige Einheit
- 5: Antriebs-/Empfangseinheit
- 6: Elektronikeinheit
- 7: Membran
- 8a,8b: Schwingstäbe
- 9a,9b: Paddel

- U_{A}: Anregesignal
- U_{E}: Empfangssignal
- f: Frequenz
- f_{ref}: Referenzwert für die Frequenz
- A: Amplitude
- A_{ref}: Referenzwert für die Amplitude
- a: frei schwingende schwingfähige Einheit
- b: mit Medium bedeckte schwingfähige Einheit
- t: Eintauchtiefe der schwingfähigen Einheit

## Patentansprüche

1. Verfahren zur Bestimmung und/oder Überwachung eines vorgebbaren Füllstands eines Mediums (2) in einem Behältnis (2a) mittels eines vibronischen Sensors (1),
mit zumindest einer Sensoreinheit (3) mit einer mechanisch schwingfähigen Einheit (4),
umfassend folgende Verfahrensschritte:
- Anregen der mechanisch schwingfähigen Einheit (4) zu mechanischen Schwingungen mittels eines Anregesignals (U_{A}) und Empfangen der mechanischen Schwingungen in Form eines Empfangssignals (U_{E}),
- Bestimmen einer Amplitude (A) und einer Frequenz (f) des Empfangssignals (U_{E}),
- Vergleichen der Frequenz (f) und der Amplitude (A) des Empfangssignals (U_{E}) mit einem vorgebbaren Frequenz-Grenzwert (f_{ref}) und einem vorgebbaren Amplituden-Grenzwert (A_{ref}), und
- Ermitteln eines Erreichens des vorgebbaren Füllstands anhand des Vergleichs der Frequenz (f) und der Amplitude (A) des Empfangssignals (U_{E}) mit dem vorgebbaren Frequenz-Grenzwert (f_{ref}) und dem vorgebbaren Amplituden-Grenzwert (A_{ref}),
**dadurch gekennzeichnet,**
**dass** im Falle einer Änderung der Amplitude (A) auf eine Bedeckung der schwingfähigen Einheit (4) durch einen Schaum oder auf das Vorhandensein eines Sediments in dem Medium (2) im Bereich der schwingfähigen Einheit (4) geschlossen wird,
**dass** im Falle der Änderung der Amplitude (A) und im Falle einer gleichbleibender Frequenz (f) auf das Vorhandensein des Sediments in dem Medium (2) im Bereich der schwingfähigen Einheit (4) und
**dass** im Falle der Änderung der Amplitude (A) und im Falle einer Änderung der Frequenz (f), wobei der vorgebbare Frequenz-Grenzwert (f_{ref}) nicht über- oder unterschritten wird, auf das Vorhandensein des Sediments in dem Medium (2) im Bereich der schwingfähigen Einheit (4) oder die Bedeckung durch den Schaum geschlossen wird.

2. Verfahren nach Anspruch 1,
wobei es sich bei dem Amplituden-Referenzwert (A_{ref}) und/oder dem Frequenz-Referenzwert (f_{ref}) jeweils um einen Wert für die Amplitude (A) und/oder die Frequenz (f) handelt, welcher Wert einer Resonanzschwingung der schwingfähigen Einheit (4) in der Grundschwingungsmode und an Luft entspricht.

3. Verfahren nach Anspruch 1 oder 2,
wobei es sich bei der schwingfähigen Einheit (4) um eine Schwinggabel mit einer Membran und zwei an der Membran befestigten Schwingstäben handelt.

## Claims

1. Method for determining and/or monitoring a predeterminable filling level of a medium (2) in a container (2a) by means of a vibronic sensor (1),
with at least one sensor unit (3) with a mechanically vibrating unit (4) comprising the following method steps:
- Excitation of the mechanically vibrating unit (4) to mechanical vibrations by means of an excitation signal (U_{A}) and reception of the mechanical vibrations in the form of a reception signal (U_{E}),
- Determine an amplitude (A) and a frequency (f) of the received signal (U_{E}),
- comparing the frequency (f) and the amplitude (A) of the received signal (U_{E}) with a predeterminable frequency limit value (f_{ref}) and a predeterminable amplitude limit value (A_{ref}), and
- Determining whether the predeterminable fill level has been reached by comparing the frequency (f) and the amplitude (A) of the received signal (U_{E}) with the predeterminable frequency limit value (f_{ref}) and the predeterminable amplitude limit value (A_{ref}),
**characterized in that**
that in the event of a change in amplitude (A), it is concluded that the vibrating unit (4) is covered by a foam or that a sediment is present in the medium (2) in the area of the vibrating unit (4),
that in the event of a change in amplitude (A) and in the event of a constant frequency (f), the presence of the sediment in the medium (2) in the region of the oscillating unit (4) and
that in the event of a change in the amplitude (A) and in the event of a change in the frequency (f), whereby the predeterminable frequency limit value (f_{ref}) is not exceeded or undershot, the presence of the sediment in the medium (2) in the region of the oscillating unit (4) or the coverage by the foam is concluded.

2. Method according to claim 1,
wherein the amplitude reference value (A_{ref}) and/or the frequency reference value (f_{ref}) is in each case a value for the amplitude (A) and/or the frequency (f), which value corresponds to a resonant oscillation of the oscillating unit (4) in the fundamental oscillation mode and in air.

3. Method according to claim 1 or 2,
wherein the vibrating unit (4) is a tuning fork with a diaphragm and two vibrating rods attached to the diaphragm.

## Revendications

1. Procédé pour déterminer et/ou surveiller un niveau de remplissage prédéterminable d'un milieu (2) dans un récipient (2a) au moyen d'un capteur vibratoire (1),
avec au moins une unité de capteur (3) avec une unité (4) pouvant vibrer mécaniquement
comprenant les étapes de procédé suivantes :
- exciter l'unité (4) capable d'osciller mécaniquement en oscillations mécaniques au moyen d'un signal d'excitation (U_{A}) et recevoir les oscillations mécaniques sous la forme d'un signal de réception (U_{E}),
- Déterminer une amplitude (A) et une fréquence (f) du signal reçu (U_{E}),
- comparaison de la fréquence (f) et de l'amplitude (A) du signal reçu (U_{E}) avec une valeur limite de fréquence (f_{ref)} et une valeur limite d'amplitude (A_{ref}) pouvant être prédéfinies, et
- détermination d'une atteinte du niveau de remplissage prédéfinissable à l'aide de la comparaison de la fréquence (f) et de l'amplitude (A) du signal de réception (U_{E}) avec la valeur limite de fréquence prédéfinissable (f_{ref}) et la valeur limite d'amplitude prédéfinissable (A_{ref}),
**caractérisé en ce**
en ce que, dans le cas d'une modification de l'amplitude (A), on conclut à un recouvrement de l'unité vibrante (4) par une mousse ou à la présence d'un sédiment dans le milieu (2) dans la zone de l'unité vibrante (4),
en ce que, dans le cas de la variation de l'amplitude (A) et dans le cas d'une fréquence (f) constante, on peut conclure à la présence du sédiment dans le milieu (2) dans la zone de l'unité vibrante (4), et
en ce que, dans le cas de la variation de l'amplitude (A) et dans le cas d'une variation de la fréquence (f), la valeur limite de fréquence (f_{ref)} pouvant être prescrite n'étant pas dépassée vers le haut ou vers le bas, on conclut à la présence du sédiment dans le milieu (2) dans la zone de l'unité vibrante (4) ou au recouvrement par la mousse.

2. Procédé selon la revendication 1,
dans lequel la valeur de référence d'amplitude (A_{ref}) et/ou la valeur de référence de fréquence (f_{ref}) sont chacune une valeur pour l'amplitude (A) et/ou la fréquence (f), laquelle valeur correspond à une oscillation de résonance de l'unité vibrante (4) dans le mode fondamental et dans l'air.

3. Procédé selon la revendication 1 ou 2,
l'unité vibrante (4) étant une fourche vibrante avec une membrane et deux barres vibrantes fixées à la membrane.
